# EUROPÄISCHE PATENTSCHRIFT

(11) **EP 2 318 722 B1**
(45) Veröffentlichungstag und Bekanntmachung des Hinweises auf die Patenterteilung: **13.02.2013**
(21) Anmeldenummer: 09779577.7
(22) Anmeldetag: 28.05.2009
(51) Int. Cl.: F16B 5/02, F16B 5/00, F16B 21/09

(54) **BEFESTIGUNGSVORRICHTUNG UND VERFAHREN ZUM BEFESTIGEN EINES ELEMENTES IN EINEM SCHLÜSSELLOCHFÖRMIGEN AUSSCHNITT EINER WAND**
FASTENING DEVICE AND METHOD FOR FASTENING AN ELEMENT IN A KEY-HOLE SHAPED CUT-OUT OF A WALL
DISPOSITIF DE FIXATION ET PROCÉDÉ DE FIXATION D UN ÉLÉMENT DANS UNE DÉCOUPE EN FORME DE TROU DE SERRURE DANS UN MUR

(30) Priorität: 28.07.2008 DE 102008040792
(43) Veröffentlichungstag der Anmeldung: 11.05.2011
(73) Patentinhaber: Robert Bosch GmbH, 70442 Stuttgart (DE)
(72) Erfinder: VARGHA, David, Budapest 1192 (HU); ADAM, Boris, 71126 Gaeufelden (DE); BEHNKE, Ulf, Reutlingen 72764 (DE); WEGNER, Jeanine, Pfullingen 72793 (DE)
(86) Internationale Anmeldenummer: PCT/EP2009/056538
(87) Internationale Veröffentlichungsnummer: WO 2010/012523

(56) Entgegenhaltungen:
- EP-A- 0 747 604
- WO-A-2004/020844
- DE-U1- 29 714 824
- US-A- 4 266 386

## Beschreibung

Die vorliegende Erfindung betrifft eine Befestigungsvorrichtung zur Befestigung eines Elementes in einem schlüssellochförmigen Ausschnitt einer Wand gemäß Anspruch 1 sowie ein Verfahren zum Befestigen einer Befestigungsvorrichtung an einer Wand gemäß Anspruch 11.

### Stand der Technik

Bauteile, insbesondere Sensoren (z.B. für Rückhaltesysteme) werden in der Automobilindustrie auf unterschiedliche Weise am Fahrzeug befestigt. Neben Anschrauben an eine in der Karosserie eingeschweißte Mutter oder Anschrauben mittels einer Schraube durch ein Loch in der Karosserie in eine Gewindebuchse des Bauteils wird das "Schlüssellochprinzip" zur Befestigung von Gehäusen verwendet. Hierbei wird z.B. ein im Gehäuse vormontierter Bolzen mit einer selbstsichernden Mutter in den größeren Teil eines schlüssellochartigen Lochs in dem Karosserieblech des Fahrzeugs eingeführt und dann im unteren schmäleren Teil des Schlüssellochs eingehängt. Danach wird die Mutter angezogen und das Bauteil dadurch festgeklemmt.

Das Schlüssellochprinzip hat gegenüber den beiden anderen oben erwähnten Methoden den Vorteil, dass keine eingeschweißte und keine vormontierte Mutter im Fahrzeug notwendig ist, was einen erheblichen Kostenvorteil darstellt. Weiter ermöglicht das Schlüssellochprinzip die sog. "Einhand-Montage" und wird daher in manchen Fällen z.B. bei schwer zugänglichen Montagebereichen sehr gerne eingesetzt.

Bei der Montage kann sich das Bauteil im Schlüsselloch jedoch verdrehen, wenn keine entsprechende Verdrehsicherung vorgesehen ist. Wenn der Sensor sich bei der Montage verdreht, ist eine sichere Erfüllung der Funktion des Sensors nicht gewährleistet.

Aus der Druckschrift EP 1 532 372 ist ein Bauteil bekannt, das eine Verdrehsicherung für die Montage in einem schlüssellochförmigen Ausschnitt aufweist. Allerdings ist das Bauteil zunächst in das Schlüsselloch einzubringen und in dem Schlüsselloch festzuhalten, um die Verdrehsicherung wirksam werden zu lassen.

### Offenbarung der Erfindung

Die vorliegende Erfindung schafft eine Befestigungsvorrichtung zur Befestigung in einem schlüssellochförmigen Ausschnitt eines Trägers oder einer Wand, wobei der schlüssellochförmige Ausschnitt durch eine breitere Öffnung in der Wand und eine mit der breiteren Öffnung verbundene schmälere Öffnung in der Wand gebildet ist und wobei die Befestigungsvorrichtung folgende Merkmale aufweist:
- ein Halteelement, das ausgebildet ist, um im befestigten Zustand der Befestigungsvorrichtung an einer Vorderseite der Wand anzuliegen und zumindest teilweise einen Rand der schmäleren Öffnung des schlüsselförmigen Abschnitts zu überdecken; und
- ein Rast- oder Klemmelement, das ausgebildet ist, um im befestigten Zustand der Befestigungsvorrichtung Eingriff durch die breitere Öffnung des schlüssellochförmigen Ausschnitts zu nehmen und um die Befestigungsvorrichtung von einer Rückseite der Wand oder dem Träger zu halten.

Ferner schafft die Erfindung ein Verfahren zum Befestigen einer Befestigungsvorrichtung an einer Wand, die einen schlüssellochförmiges Ausschnitt umfasst, wobei die Befestigungsvorrichtung ein Halteelement und ein Rastelement umfasst, wobei der schlüssellochförmige Ausschnitt durch eine breitere Öffnung in der Wand und eine mit der breiteren Öffnung verbundene schmälere Öffnung in der Wand gebildet ist und wobei das Verfahren die folgenden Schritte umfasst:
- Einführen des Rastelementes der Befestigungsvorrichtung durch die breitere Öffnung des schlüssellochförmigen Ausschnitts der Wand wobei das Halteelement einen Rand der schmäleren Öffnung des schlüssellochförmigen Ausschnitts zumindest teilweise überdeckt;
- Einrasten des Rastelementes auf der Rückseite der Wand im Bereich der breiteren Öffnung des schlüssellochförmigen Ausschnitts; und
- Andrücken des Halteelementes an die Wand.

Die vorliegende Erfindung basiert auf der Erkenntnis, dass eine einfache und zugleich kostengünstig herzustellende Möglichkeit zur Sicherung der Befestigungsvorrichtung gegen ein Verdrehen (beispielsweise beim Festschrauben der Befestigungsvorrichtung) in einem schlüssellochförmigen Ausschnitt einer Wand durch das Vorsehen eines Rastelements möglich ist. Das Rastelement wird beim Einführen in den schlüssellochförmigen Ausschnitt derart hinter der Wand im Bereich der weiteren Öffnung eingerastet, dass ein Herausfallen der Befestigungsvorrichtung aus dem schlüssellochförmigen Ausschnitt vor dem "Festziehen" verhindert wird. Nachfolgend kann die Befestigung der Befestigungsvorrichtung über das Halteelement an der Wand erfolgen, wobei das Halteelement zumindest teilweise einen Rand der schmäleren Öffnung des schlüssellochförmigen Abschnitts überdeckt. Durch die Überdeckung dieses Rands ist somit sichergestellt, dass die Befestigungsvorrichtung ausreichend stabil an der Wand abgestützt und damit befestigt werden kann. Zugleich kann durch das Einrasten des Rastelements an (der Rückseite) der Wand im Bereich der breiteren Öffnung sichergestellt werden, dass sich die Befestigungsvorrichtung bei deren Befestigung an der Wand nicht verdrehen kann.

Die vorliegende Erfindung bietet den Vorteil, dass eine wesentliche Verbesserung des Schutzes gegen ein Verdrehen der Befestigungsvorrichtung bei deren Befestigung an der Wand durch einfache herstellungstechnische Änderungen erreichbar ist. Beispielsweise kann die Befestigungsvorrichtung als ein Spritzgusselement hergestellt werden, so dass das Bereitstellen des Rastelements lediglich eine geringe Modifikation der entsprechenden Gussform erfordert. Auf diese Weise können unter Verwendung der erfindungsgemäßen Befestigungsvorrichtung auch Elemente (wie beispielsweise Sensoren) an der Wand durch eine einfache Montage befestigt werden, die eine hochpräzise Ausrichtung an der Wand erfordern.

In einer besonderen Ausführungsform der Erfindung kann das Rastelement einen Haken umfassen, der aus einem flexiblen Material gebildet ist. Dies bietet die Möglichkeit des Vorsehens einer einfach herzustellenden Schnappvorrichtung zum Einrasten des Hakens an der Rückseite der Wand, so dass zur Befestigung lediglich ein kurzer Druck auf die Befestigungsvorrichtung ausgeübt zu werden braucht, um das Rastelement in den schlüssellochförmigen Ausschnitt bzw. die breitere Öffnung einrasten zu lassen. Ferner kann auch ein solches Rastelement sehr einfach durch eine entsprechende Modifikation einer Spritzgussform bereitgestellt werden, welche mit einem (im ausgehärteten Zustand flexiblen) Kunststoff gefüllt wird.

Weiterhin kann das Rastelement auf eine mehrfach ausführbare Montage optimiert sein (beispielweise durch eine schräge Flanke) und ohne Hilfsmittel durch einfaches Herausziehen gelöst werden. Dies bietet den Vorteil, dass das Bauelement bei einer falschen Montage einfach wieder entfernt werden kann, so dass die Erfindung auch fehlertolerant ist. Auch kann die Befestigungsvorrichtung gegebenenfalls mehrfach eingesetzt werden, wenn dies erforderlich sein sollte.

Ferner ist ein einer weiteren Ausführungsform der Erfindung das Rastelement als Einweg-Einschnapp-Haken ausgelegt. Nachdem die Befestigungsvorrichtung meist nur ein einziges Mal zur Befestigung an der Wand benötigt wird, bietet diese Ausführungsform der Erfindung die Möglichkeit, bei der Auslegung des Hakens auf eine optimale Halteeigenschaft nach dem Einrasten abstellen zu können. Ein Kompromiss zwischen guter Haltefähigkeit und Umkehrbarkeit der Einrastung kann je nach Auslegung des Hakens gewährleistet werden. Weiterhin kann auch das Rastelement einen Haken mit einem Verbindungssteg und einem Hakenkopf umfassen, wobei der Haken an dem Übergang zwischen Verbindungssteg und Hakenkopf einen im Wesentlichen rechten Winkel ausbildet. Eine solche Ausführungsform der Erfindung bietet eine besonders starke Haltefähigkeit, da hierdurch eine maximale Auflagefläche zwischen der Rückseite der Wand und dem Rastelement gegeben ist. Somit kann auch bei einer derartigen Auslegung des Rastelementes bereits durch den Haken nicht nur ein Herausfallen der Befestigungsvorrichtung als dem schlüssellochförmigen Ausschnitt sichergestellt werden, sondern auch ein Schutz gegen ein Verdrehen beim Festziehen der Befestigungsvorrichtung an der Wand alleine durch das Rastelement sichergestellt werden.

In einer weiteren Ausführungsform der vorliegenden Erfindung kann das Rastelement von einem Schutzelement zumindest teilweise umgeben sein. Beispielsweise kann das Schutzelement das Rastelement U-förmig umgeben, so dass das Rastelement nur an der offenen Seite aus dem Schutzelement herausragt und an dieser Seite Eingriff mit der Wand nimmt. Dies bietet einen Schutz gegenüber Beschädigung des Rastelementes und einen Vorteil, da das Rastelement als Element mit federnden Bauteilen ein empfindliches Element ist, welches beim unvorsichtigen Einbau möglicherweise abgebrochen oder anderweitig beschädigt werden kann. Wird dagegen das Rastelement durch ein Schutzelement zumindest teilweise umgeben (speziell durch den Schutz um den Weg des Zurückbiegens des Rastelements beim Einrasten), kann eine deutliche Erhöhung des Schutzes des Rastelementes gegen Beschädigungen sichergestellt werden, wobei das Vorsehen dieses Schutzelementes durch einfache und kostengünstige Maßnahmen (beispielsweise ebenfalls durch eine einfache Modifikation einer entsprechenden Spritzgussform) möglich wird.

Günstig ist es auch, wenn das Schutzelement eine Breite aufweist, die im Wesentlichen der Breite der breiteren Öffnung des schlüssellochförmigen Abschnitts entspricht. Hierdurch kann ein einfacher Verdrehungsschutz realisiert werden, da das Schutzelement sich an den beiden seitlichen Rändern der breiteren Öffnung abstützen kann. Das Rastelement braucht in diesem Fall lediglich einen Schutz gegen das Hinausfallen der Befestigungsvorrichtung liefern, so dass es auch einfacher und damit kostengünstiger herstellbar wird.

Weiterhin kann die Befestigungsvorrichtung einstückig aus Kunststoff gebildet sein. Eine solche Befestigungsvorrichtung bietet deutliche Vorteile bei der Herstellung gegenüber einer Befestigungsvorrichtung, welche aus mehreren Elementen zusammengesetzt werden muss.

In einer weiteren Ausführungsform der Erfindung umfasst die Befestigungsvorrichtung zumindest ein Schraubverbindungselement, welches ausgebildet ist, um im befestigten Zustand der Befestigungsvorrichtung das Haltelement im Bereich der schmäleren Öffnung an die Wand zu drücken. Eine solche Ausführungsform der Erfindung stellt eine schnelle und einfach zu befestigende Befestigungsvorrichtung zur Verfügung, die in dem schlüssellochförmigen Ausschnitt befestigbar ist.

Ferner kann gemäß einer weiteren Ausführungsform der Erfindung ein Sensorelement mit einer Befestigungsvorrichtung vorgesehen sein, wie sie vorstehend beschrieben wurde. Ein solches Sensorelement bietet den Vorteil, dass insbesondere ein sehr sicherer Verdrehungsschutz implementiert werden kann, so dass das Sensorelement bei der Befestigung hochgenau ausgerichtet bleibt.

### Kurze Beschreibung der Zeichnungen

Die Erfindung wird nachstehend anhand der beigefügten Figuren beispielhaft näher erläutert. Es zeigt:
- Fig. 1: eine perspektivische Darstellung eines Ausführungsbeispiels der vorliegenden Erfindung;
- Fig. 2: eine Schnittdarstellung eines Ausführungsbeispiels der vorliegenden Erfindung im befestigten Zustand;
- Fig. 3: eine Darstellung eines Ausschnitts der Schnittdarstellung aus Fig. 2, in dem das Einrastverhalten des Rastelementes vor und nach dem Einrasten dargestellt ist;
- Fig. 4: ein Ablaufdiagramm eines Ausführungsbeispiels der vorliegenden Erfindung als Verfahren; und
- Fig. 5: eine Darstellung einer möglichen Form der schlüssellochförmigen Aussparung in der Wand bzw. dem Träger.

Eventuell angegebene Dimensionen und Maße sind nur exemplarisch, so dass die Erfindung nicht auf diese Dimensionen und Maße beschränkt ist. Gleiche oder ähnliche Elemente sind mit gleichen oder ähnlichen Bezugszeichen versehen. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden können oder sie zu weiteren, hier nicht explizit beschriebenen Kombinationen zusammengefasst werden können.

### Ausführungsformen der Erfindung

Ziel der Erfindung ist es unter anderem, einen erweiterten Verdrehschutz bei der Montage eines Bauteils mit Schlüssellochanschraubkonzept zu gewährleisten. Dabei soll das teilweise Herauskippen des Bauteils nach dem Steckvorgang eines Anschraubbolzens in das Schlüsselloch verhindert werden. Bei diesem Herauskippen kann es passieren, dass sich das Bauteil um die Bolzenachse eines Befestigungsbolzens dreht und anschließend nicht mehr korrekt angeschraubt werden kann. Diese Gefahr wird mit Hilfe der vorliegenden Erfindung beseitigt.

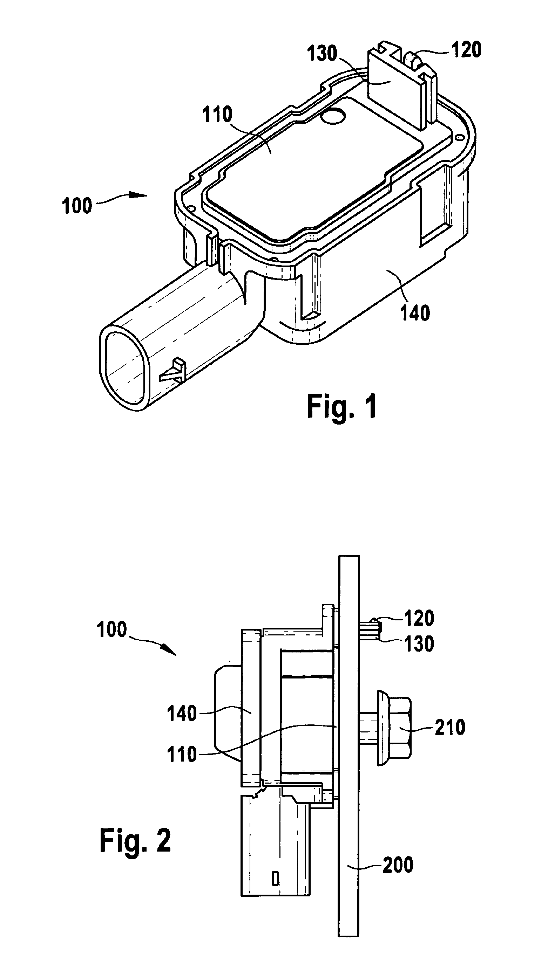

In Fig. 1 ist eine perspektivische Ansicht eines Ausführungsbeispiels der vorliegenden Erfindung dargestellt. Ein Befestigungselement 100 umfasst ein Halteelement 110, das beispielsweise durch eine Halteplatte gebildet wird, die an einer Wand aufliegt, wenn die Befestigungsvorrichtung 100 in dem schlüssellochförmigen Ausschnitt in der Wand oder eines Trägers befestigt wird. Das Halteelement 110 sollte in diesem Fall einen Rand des schmäleren Abschnitts (Öffnung) des schlüssellochförmigen Ausschnitts bedecken, damit eine Abstützung des Halteelementes 110 sowohl an der Wand als auch eine Kontaktierungsmöglichkeit (beispielsweise eines Bolzens) durch das Halteelement 110 in den schmäleren Abschnitt des schlüsselförmigen Ausschnitts in der Wand möglich ist. Weiterhin umfasst die Befestigungsvorrichtung ein Rastelement 120, das beispielsweise in einem Clip-In-Pin mit Rastnase aus einem flexiblen Material besteht. Die Erfindung beruht im Wesentlichen auf einer Verrastung der Befestigungsvorrichtung 100 im "Schlüsselloch" während der Vormontage (d.h. dem Stecken der Befestigungsvorrichtung in das Schlüsselloch). Der Vorteil der Erfindung besteht in einer Vermeidung des teilweisen Herauskippens nach dem Stecken der Befestigungsvorrichtung in das Schlüsselloch. Dadurch wird ein Fehlverbau durch Verdrehung des Bauteils nach der Vormontage und vor dem endgültigen Verschrauben wirksam verhindert.

Weiterhin ist in dem in Figur 1 dargestellten Ausführungsbeispiel der vorliegenden Erfindung noch ein Schutzelement 130 vorgesehen, welches das Rastelement 120 U-förmig umgibt. Das Schutzelement 130 kann dabei eine Breite aufweisen, die der Breite der breiteren Öffnung des Schlüssellochs entspricht. Hierdurch kann sichergestellt werden, dass einerseits das Schutzelement 130 eine Beschädigung oder ein Abbrechen des Rastelements 120 vor dem Einbau der Befestigungsvorrichtung 100 verhindert und andererseits zugleich eine seitliche Verdrehung der Befestigungsvorrichtung 100 beim Befestigen verhindert wird. An der Befestigungsvorrichtung 100 kann ein Sensor 140 zur Messung von beispielsweise einer Beschleunigung angebracht sein, so dass durch die Sicherung gegen Verdrehungen, die durch die vorliegenden Erfindung bereitgestellt wird, eine hochgenaue Ausrichtung des Sensors vor der Befestigung an beispielsweise einer Karosseriewand eines Fahrzeugs möglich ist. Auf diese Weise kann die Ausrichtung auch beim Befestigen des Sensors (beispielsweise unter Verwendung einer Schraubvorrichtung) nicht verrutschen.

Um eine Herstellung der Befestigungsvorrichtung 100 möglichst einfach und kostengünstig zu gestalten, kann das Halteelement 110, das Rastelement 120 sowie das Schutzelement 130 einstückig aus einem flexiblen Kunststoffmaterial hergestellt werden. Hierdurch ist lediglich eine einfache und kostengünstige Anpassung einer Spritzgussform erforderlich, um die Vorteile der Erfindung nutzen zu können. Der erforderliche Mehrverbrauch an Kunststoffmaterial ist vernachlässigbar.

In Figur 2 ist das in Figur 1 dargestellte Ausführungsbeispiel der vorliegenden Erfindung im verbauten Zustand an einer Wand 200 in einer Schnittdarstellung wiedergegeben. Hierbei ist zusätzlich eine Schraubverbindung 210 dargestellt, welche mit dem Halteelement 110 zusammenwirkt wirkt und die Befestigungsvorrichtung 100 im Bereich des schmäleren Abschnitts des Schlüssellochs an der Wand befestigt.

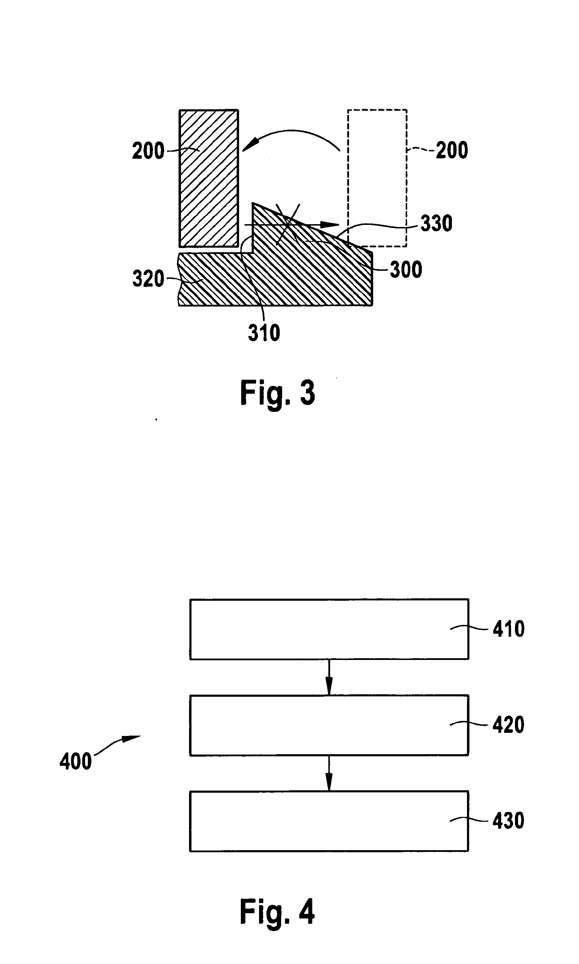

Das Wirkprinzip der Erfindung gemäß dem in den Figuren 1 und 2 dargestellten Ausführungsbeispiel ist in Fig. 3 genauer dargestellt, welche einen Ausschnitt der Schnittdarstellung aus Fig. 2 vor (gestrichelte Darstellung der Wand 200) und nach dem Einrasten des Rastelementes 120 in der Wand 200 wiedergibt. Der flexible Clip-In-Pin (d.h. das Rastelement 120) kann beim Eindrücken der Befestigungsvorrichtung 100 durch die Berührung mit der Wand 200 in Richtung des Anschraubbolzens der Schraubverbindung 210 ausgelenkt werden, so dass die in Richtung "Gehäuse" flach ansteigende Rastnase 300 am Ende des Pins durch die Anschraubplatte 200 gedrückt werden kann. Der Winkel zwischen der dem Sensor zugewandten Seite 310 der Rastnase 300 und einem Verbindungssteg 320 ist deutlich steiler (idealerweise 90°) als der Winkel der dem Sensor abgewandten Seite 330 der Rastnase 300 und dem Verbindungssteg 320, so dass es zu einer Verrastung kommt, sobald der höchste Punkt der Rastnase 300 durch die Anschraubplatte 200 hindurch gelangt ist (d.h. es kommt zu einem Rückfedern des Pins bzw. des Rastelementes). Damit ist der umgekehrte Weg des Rastelementes 120 aus dem Schlüsselloch heraus idealerweise nicht mehr möglich. Als (weitere) Verdrehsicherung und auch zum Schutz des Pins 120 ist um den Pin ein Kunststoffanker 130 ausgeformt.

Die Ausführung der Erfindung am Beispiel der Figuren 1 bis 3 ist dergestalt, dass der Rasthaken 120 das Herausfallen des Ankers aus dem Schlüsselloch idealerweise verhindert. Der Anker 130 verhindert zusätzlich, dass der Sensor 140 (bzw. eine am Sensor 140 angebrachte Befestigungsvorrichtung 100) sich beispielsweise gegen einen Türträger einer Fahrzeugkarosserie verdrehen kann. Ist die Halteverbindung zwischen Rastelement 120 und Wand 200 jedoch ausreichend stark, kann auch die Verdrehung der Befestigungsvorrichtung 100 gegen die Wand um eine Achse der Schraubverbindung 210 verhindert werden.

Die Erfindung kann prinzipiell bei allen Bauteilen, die das Schlüssellochanschraubkonzept nutzen eingesetzt werden.

Die Verwendung des beschriebenen Ansatzes ist aktuell die einzige bekannte Möglichkeit, um die Verdrehsicherheit bei Verwendung des durch die AK-LV29 (Standardspezifikation) festgelegten Lochbildes sicher zu stellen.

In Fig. 4 ist ein Ausführungsbeispiel der vorliegenden Erfindung als Verfahren 400 zum Befestigen einer Befestigungsvorrichtung an einer Wand, die einen schlüssellochförmigen Ausschnitt umfasst, dargestellt. Befestigungsvorrichtung weist ein Halteelement und ein Rastelement auf, wobei der schlüssellochförmige Ausschnitt durch eine breitere Öffnung in der Wand und eine mit der breiteren Öffnung verbundene schmälere Öffnung in der Wand gebildet ist. Das Verfahren umfasst einen ersten Schritt des Einführens 410 des Rastelementes der Befestigungsvorrichtung durch die breitere Öffnung des schlüssellochförmigen Ausschnitts der Wand wobei das Haltelemente einen Rand der schmäleren Öffnung des schlüssellochförmigen Ausschnitts zumindest teilweise überdeckt. Ferner umfasst das Verfahren 400 einen zweiten Schritt des Einrastens 420 des Rastelementes auf der Rückseite der Wand im Bereich der breiteren Öffnung des schlüssellochförmigen Ausschnitts und einen dritten Schritt des Andrückens 430 des Halteelementes an die Wand.

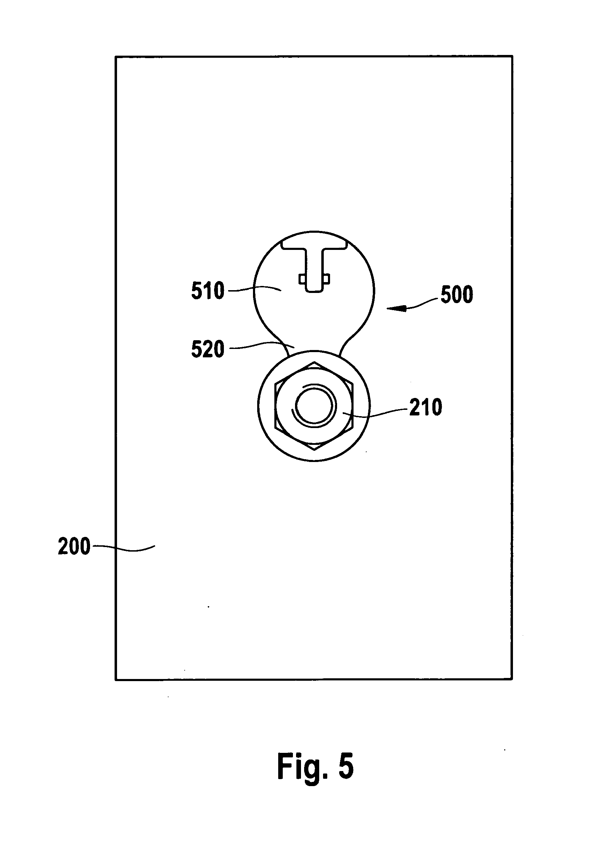

In Fig. 5 ist eine Darstellung einer Form einer schlüssellochförmigen Aussparung 500 in der Wand 200 oder einem Träger (vor einer Rückseite bei der Befestigung einer Befestigungsvorrichtung) abgebildet. Hierbei sind die breitere 510 und die schmälere 520 Öffnung der schlüssellochförmigen Aussparung 500 zu erkennen, wobei die schmälere Öffnung 520 im Wesentlichen von der Schraubvorrichtung 210 abgedeckt wird. In der breiteren Öffnung 510 ist ein Element zum Halten der Befestigungsvorrichtung 100 eingebracht.

## Patentansprüche

1. Befestigungsvorrichtung (100) zur Befestigung eines Elementes (140) in einem schlüssellochförmigen Ausschnitt (500) einer Wand (200), wobei die Befestigungsvorrichtung (100) folgende Merkmale aufweist:
- ein Halteelement (110), das ausgebildet ist, um im befestigten Zustand der Befestigungsvorrichtung (100) an einer Vorderseite der Wand (200) anzuliegen und zumindest teilweise einen Rand einer schmäleren Öffnung (520) des schlüsselförmigen Abschnitts (500) einer Wand (200) zu überdecken; und
- ein Rastelement (120), das ausgebildet ist, um im befestigten Zustand der Befestigungsvorrichtung (100) Eingriff durch eine breitere Öffnung (510) des schlüssellochförmigen Ausschnitts (500) der Wand (200) zu nehmen und um die Befestigungsvorrichtung (100) von einer Rückseite der Wand (200) zu halten.

2. Befestigungsvorrichtung (100) gemäß Anspruch 1, **dadurch gekennzeichnet, dass** das Rastelement (120) einen Haken umfasst, der aus einem flexiblen Material gebildet ist.

3. Befestigungsvorrichtung (100) nach Ansprüchen 1 oder 2, **dadurch gekennzeichnet, dass** das Rastelement (120) auf eine mehrfach ausführbare Montage optimiert ist und ohne Hilfsmittel durch einfaches Herausziehen gelöst werden kann.

4. Befestigungsvorrichtung (100) gemäß einem der Ansprüche 1 oder 2, **dadurch gekennzeichnet, dass** das Rastelement (120) ein Einweg-Einschnapp-Haken ist.

5. Befestigungsvorrichtung (100) gemäß einem der Ansprüche 1 bis 4, **dadurch gekennzeichnet, dass** das Rastelement (120) einen Haken mit einem Verbindungssteg (320) und einem Hakenkopf (300) umfasst, wobei der Haken an dem Übergang zwischen Verbindungssteg (320) und Hakenkopf (300) einen im Wesentlichen rechten Winkel ausbildet.

6. Befestigungsvorrichtung (100) gemäß einem der Ansprüche 1 bis 5, **dadurch gekennzeichnet, dass** das Rastelement (120) von einem Schutzelement (130) zumindest teilweise umgeben ist.

7. Befestigungsvorrichtung (100) gemäß Anspruch 6, **dadurch gekennzeichnet, dass** das Schutzelement (130) eine Breite aufweist, die im Wesentlichen der Breite der breiteren Öffnung (510) des schlüssellochförmigen Ausschnitts (500) entspricht, in den die Befestigungsvorrichtung (100) montiert werden soll.

8. Befestigungsvorrichtung (100) gemäß einem der Ansprüche 1 bis 7, **dadurch gekennzeichnet, dass** sie einstückig aus einem Kunststoffmaterial gebildet ist.

9. Befestigungsvorrichtung (100) gemäß einem der Ansprüche 1 bis 8, **dadurch gekennzeichnet, dass** sie zumindest ein Schraubverbindungselement (210) umfasst, welches ausgebildet ist, um im befestigten Zustand der Befestigungsvorrichtung (100) das Haltelement (110) im Bereich der schmäleren Öffnung an die Wand (200) zu drücken.

10. Sensorelement (140) mit einer Befestigungsvorrichtung (100) gemäß einem der Ansprüche 1 bis 9.

11. Verfahren (400) zum Befestigen einer Befestigungsvorrichtung (100) an einer Wand (200), die einen schlüssellochförmigen Ausschnitt (500) umfasst, wobei die Befestigungsvorrichtung (100) ein Halteelement (110) und ein Rastelement (120) umfasst, wobei der schlüssellochförmige Ausschnitt (500) durch eine breitere Öffnung (510) in der Wand (200) und eine mit der breiteren Öffnung (510) verbundene schmälere Öffnung (520) in der Wand (200) gebildet ist und wobei das Verfahren (400) die folgenden Schritte umfasst:
- Einführen (410) des Rastelementes der Befestigungsvorrichtung (100) durch die breitere Öffnung (510) des schlüssellochförmigen Ausschnitts (500) der Wand (200), wobei das Haltelemente (110) einen Rand der schmäleren Öffnung (520) des schlüssellochförmigen Ausschnitts (500) zumindest teilweise überdeckt;
- Einrasten (420) des Rastelementes (120) auf der Rückseite der Wand (200) im Bereich der breiteren Öffnung (510) des schlüssellochförmigen Ausschnitts (500); und
- Andrücken (430) des Halteelementes (110) an die Wand (200).

## Claims

1. Fastening device (100) for fastening an element (140) in a keyhole-shaped cutout (500) of a wall (200), wherein the fastening device (100) has the following features:
- a retaining element (110) which is designed so that, in the fastened state of the fastening device (100), it butts against a front side of the wall (200) and covers over, at least in part, a periphery of a relatively narrow opening (520) of the keyhole-shaped portion (500) of a wall (200); and
- a latching element (120), which is designed so that, in the fastened state of the fastening device (100), it engages through a wider opening (510) of the keyhole-shaped cutout (500) of the wall (200) and retains the fastening device (100) from a rear side of the wall (200).

2. Fastening device (100) according to Claim 1, **characterized in that** the latching element (120) comprises a hook which is formed from a flexible material.

3. Fastening device (100) according to Claim 1 or 2, **characterized in that** the latching element (120) is optimized for being fitted a number of times and can be released, without auxiliary means, simply by being pulled out.

4. Fastening device (100) according to Claims 1 or 2, **characterized in that** the latching element (120) is a single-use snap-fit hook.

5. Fastening device (100) according to one of Claims 1 to 4, **characterized in that** the latching element (120) comprises a hook with a connecting crosspiece (320) and a hook head (300), wherein the hook forms an essentially right angle at the transition between the connecting crosspiece (320) and the hook head (300).

6. Fastening device (100) according to one of Claims 1 to 5, **characterized in that** the latching element (120) is enclosed, at least in part, by a protecting element (130).

7. Fastening device (100) according to Claim 6, **characterized in that** the protective element (130) has a width that corresponds essentially to the width of the relatively wide opening (510) of the keyhole-shaped cutout (500) into which the fastening device (100) is to be fitted.

8. Fastening device (100) according to one of Claims 1 to 7, **characterized in that** it is formed in a single piece from a plastics material.

9. Fastening device (100) according to one of Claims 1 to 8, **characterized in that** it comprises at least one screw-connection element (210), which is designed so that, in the fastened state of the fastening device (100), it pushes the retaining element (110), in the region of the relatively narrow opening, onto the wall (200).

10. Sensor element (140) having a fastening device (100) according to one of Claims 1 to 9.

11. Method (400) of fastening a fastening device (100) on a wall (200) which comprises a keyhole-shaped cutout (500), wherein the fastening device (100) comprises a retaining element (110) and a latching element (120), wherein the keyhole-shaped cutout (500) is formed by a relatively wide opening (510) in the wall (200) and by a narrower opening (520) in the wall (200), the latter opening being connected to the relatively wide opening (510), and wherein the method (400) comprises the following steps:
- introducing (410) the latching element of the fastening device (100) through the relatively wide opening (510) of the keyhole-shaped cutout (500) of the wall (200), wherein the retaining element (110) covers over, at least in part, a periphery of the narrower opening (520) of the keyhole-shaped cutout (500);
- latching in (420) the latching element (120) on the rear side of the wall (200) in the region of the relatively wide opening (510) of the keyhole-shaped cutout (500); and
- pushing (430) the retaining element (110) onto the wall (200).

## Revendications

1. Dispositif de fixation (100) pour la fixation d'un élément (140) dans une découpe en forme de trou de serrure (500) dans une paroi (200), le dispositif de fixation (100) présentant les caractéristiques suivantes :
- un élément de retenue (110) qui est conçu pour s'appliquer contre une face avant de la paroi (200) dans l'état fixé du dispositif de fixation (100) et pour recouvrir au moins partiellement un bord d'une ouverture plus étroite (520) de la découpe en forme de trou de serrure (500) dans une paroi (200) ; et
- un élément d'encliquetage (120) qui est conçu pour venir en prise à travers une ouverture plus large (510) de la découpe en forme de trou de serrure (500) dans la paroi (200) dans l'état fixé du dispositif de fixation (100) et pour retenir le dispositif de fixation (100) à partir d'une face arrière de la paroi (200).

2. Dispositif de fixation (100) selon la revendication 1, **caractérisé en ce que** l'élément d'encliquetage (120) comporte un crochet qui est formé à partir d'un matériau flexible.

3. Dispositif de fixation (100) selon la revendication 1 ou 2, **caractérisé en ce que** l'élément d'encliquetage (120) est optimisé pour permettre un montage pouvant être réalisé à plusieurs reprises et peut être détaché par simple retrait sans moyen auxiliaire.

4. Dispositif de fixation (100) selon la revendication 1 ou 2, **caractérisé en ce que** l'élément d'encliquetage (120) est un crochet encliquetable à usage unique.

5. Dispositif de fixation (100) selon l'une quelconque des revendications 1 à 4, **caractérisé en ce que** l'élément d'encliquetage (120) comporte un crochet présentant une nervure de liaison (320) et une tête de crochet (300), le crochet formant un angle essentiellement droit au niveau de la transition entre la nervure de liaison (320) et la tête de crochet (300).

6. Dispositif de fixation (100) selon l'une quelconque des revendications 1 à 5, **caractérisé en ce que** l'élément d'encliquetage (120) est entouré au moins partiellement par un élément de protection (130).

7. Dispositif de fixation (100) selon la revendication 6, **caractérisé en ce que** l'élément de protection (130) présente une largeur qui correspond essentiellement à la largeur de l'ouverture plus large (510) de la découpe en forme de trou de serrure (500) dans laquelle le dispositif de fixation (100) doit être monté.

8. Dispositif de fixation (100) selon l'une quelconque des revendications 1 à 7, **caractérisé en ce qu'**il est formé d'une seule pièce à partir d'un matériau plastique.

9. Dispositif de fixation (100) selon l'une quelconque des revendications 1 à 8, **caractérisé en ce qu'**il comporte au moins un élément de liaison par vissage (210) qui est conçu pour presser l'élément de retenue (110) contre la paroi (200) dans la région de l'ouverture plus étroite dans l'état fixé du dispositif de fixation (100).

10. Élément de capteur (140) comprenant un dispositif de fixation (100) selon l'une quelconque des revendications 1 à 9.

11. Procédé (400) pour fixer un dispositif de fixation (100) à une paroi (200) qui comporte une découpe en forme de trou de serrure (500), le dispositif de fixation (100) comportant un élément de retenue (110) et un élément d'encliquetage (120), la découpe en forme de trou de serrure (500) étant formée par une ouverture plus large (510) dans la paroi (200) et une ouverture plus étroite (520), reliée à l'ouverture plus large (510), dans la paroi (200) et le procédé (400) comportant les étapes suivantes :
- insertion (410) de l'élément d'encliquetage du dispositif de fixation (100) à travers l'ouverture plus large (510) de la découpe en forme de trou de serrure (500) dans la paroi (200), l'élément de retenue (110) recouvrant au moins partiellement un bord de l'ouverture plus étroite (520) de la découpe en forme de trou de serrure (500) ;
- encliquetage (420) de l'élément d'encliquetage (120) sur la face arrière de la paroi (200) dans la région de l'ouverture plus large (510) de la découpe en forme de trou de serrure (500) ; et
- pression (430) de l'élément de retenue (110) contre la paroi (200).
